# EUROPEAN PATENT APPLICATION

(11) **EP 2 184 322 A2**
(43) Date of publication of application: **12.05.2010**
(21) Application number: 09013972.6
(22) Date of filing: 06.11.2009
(51) Int. Cl.: C08L 75/08

(54) **Rubber member for conveying paper sheets**

(30) Priority: 07.11.2008 JP 2008287161
(71) Applicant: Synztec Co., Ltd., Shinagawa-ku Tokyo 140-0013 (JP)
(72) Inventor: Fujii, Yohei, Tokyo 140-0013 (JP); Hamada, Hirokazu, Tokyo 140-0013 (JP)
(74) Representative: Strehl Schübel-Hopf & Partner

(57) **Abstract**

The rubber member of the invention is formed through molding a mixture containing 100 parts by mass of a urethane rubber, 2 to 8 parts by mass of a hydrolysis-preventing agent, 1 to 6 parts by mass of an anti-static agent, and 3 to 15 parts by mass of an anti-tack agent.

## Description

### [Technical Field]

The present invention relates to a rubber member for conveying paper sheets employed as an endless belt for conveying paper sheets, a rubber roller for conveying paper sheets, or the like, for use in a machine such as an automatic ticket gate, a cash depositing/dispensing machine, or a bill changer, for the purpose of conveying magnetic cards, coins, etc. As used herein, the term "paper sheets" encompasses a variety of paper sheets, PPC sheets, as well as a variety of films, magnetic cards, tickets, banknotes, coins, etc.

### [Background Art]

Rubber members for conveying paper sheets; e.g., an endless belt for conveying paper sheets and a rubber roller for conveying paper sheets, for use in a machine such as an automatic ticket gate, a cash depositing/dispensing machine, or a bill changer, for the purpose of conveying magnetic cards, coins, etc. must meet several requirements in order to smoothly convey banknotes, films, magnetic cards, tickets, etc. in the relevant machine. The requirements include having a smooth and non-tacky surface; having sufficient elasticity; having sufficient tear strength so that the rubber members do not tear by contact with other members in a machine employing them; having large elongation and small initial tension so as to ensure large acceptable distance between pulleys along the axial direction; having sufficient moisture resistance; and being free from electrostaticity-related trouble.

In order to meet the requirements, there has been proposed a urethane composition for paper-feed rollers, the composition containing polytetramethylene ether glycol (PTMG) and polypropylene glycol (PPG) in specific amounts (see Patent Document 1). The present applicant also proposed an endless belt for conveying paper sheets formed from a kneading-type polyurethane, wherein the average length of caprolactone chains of poly-ε-caprolactone diol is controlled to fall within a specific range (see Patent Document 2).

However, there is demand for rubber member for conveying paper sheets having further improved moisture resistance and excellent anti-tack property.

### [Prior Art Document]

### [Patent Documents]

[Patent Document 1] Japanese Patent Application Laid-Open (*kokai*) No. 2002-068515
[Patent Document 2] Japanese Patent Application Laid-Open (*kokai*) No. Hei 10-17173

### [Summary of the Invention]

### [Problems to be Solved by the Invention]

In view of the foregoing, an object of the present invention is to provide a rubber member for conveying paper sheets, which member is excellent in anti-static property, anti-tack property, and moisture resistance.

### [Means for Solving the Problems]

In a first mode of the present invention for attaining the aforementioned object, there is provided a rubber member for conveying paper sheets, **characterized in that** the rubber member is formed through molding a mixture comprising 100 parts by mass of a urethane rubber, 2 to 8 parts by mass of a hydrolysis-preventing agent, 1 to 6 parts by mass of an anti-static agent, and 3 to 15 parts by mass of an anti-tack agent.

A second mode of the present invention is directed to a specific embodiment of the rubber member for conveying paper sheets of the first mode, wherein the anti-tack agent is at least one species selected from the group consisting of sulfur factice, sulfur-chloride factice, and sulfur-free factice.

A third mode of the present invention is directed to a specific embodiment of the rubber member for conveying paper sheets of the first or second mode, wherein the anti-static agent is at least one species selected from the group consisting of a surfactant and a glycol.

A fourth mode of the present invention is directed to a specific embodiment of the rubber member for conveying paper sheets of any of the first to third modes, wherein the hydrolysis-preventing agent is at least one species selected from the group consisting of a polycarboximide and 4-t-butylcatechol.

A fifth mode of the present invention is directed to a specific embodiment of the rubber member for conveying paper sheets of any one of the first to fourth modes, wherein the rubber member for conveying paper sheets is an endless belt for conveying paper sheets held by means of two of said endless belt facing each other.

A sixth mode of the present invention is directed to a specific embodiment of the rubber member for conveying paper sheets of any one of the first to fifth modes, wherein the rubber member for conveying paper sheets is a rubber roller for conveying paper sheets.

### [Effects of the Invention]

According to the present invention, a hydrolysis-preventing agent, an anti-static agent, and an anti-tack agent are added in predetermined amounts to a urethane rubber.
Thus, there can be provided a rubber member for conveying paper sheets, which member exhibits not only excellent anti-static property and excellent anti-tack property but also excellent moisture resistance.

### [Brief Description of the Drawings]

[FIG. 1] A conceptual schematic view of an exemplary mode of use of the rubber member for conveying paper sheets.
[FIG. 2] A sketch showing a method for measuring frictional electrostatic voltage employed in the present invention.
[FIG. 3] A schematic view of a belt running test apparatus employed in Test Example.

### [Modes for Carrying Out the Invention]

The rubber member for conveying paper sheets of the present invention is formed through molding a mixture comprising 100 parts by mass of a urethane rubber, 2 to 8 parts by mass of a hydrolysis-preventing agent, 1 to 6 parts by mass of an anti-static agent, and 3 to 15 parts by mass of an anti-tack agent. The present inventors have found that, when a hydrolysis-preventing agent, an anti-static agent, and an anti-tack agent are added in predetermined amounts to a urethane rubber, the resultant mixture yields a rubber member suitable for conveying paper sheets, the rubber member exhibiting not only excellent anti-static property and excellent anti-tack property but also excellent moisture resistance. The present invention has been accomplished on the basis of this finding.

In the present invention, a hydrolysis-preventing agent is employed in combination with an anti-static agent and an anti-tack agent. Through combined use of these agents in predetermined amounts, all of the hydrolysis-preventing property, anti-static property, or anti-tack property of the rubber member of the invention can be effectively attained without impairing any of these properties.

The rubber member for conveying paper sheets is formed through molding a mixture comprising 100 parts by mass of a urethane rubber, 2 to 8 parts by mass of a hydrolysis-preventing agent, 1 to 6 parts by mass of an anti-static agent, and 3 to 15 parts by mass of an anti-tack agent. Through combined use of these agents in predetermined amounts, the hydrolysis-preventing property, anti-static property, and anti-tack property can be effectively attained. That is, the rubber member for conveying paper sheets exhibits excellent anti-static property and anti-tack property as well as excellent moisture resistance, which is resulted from effective prevention of hydrolysis of urethane rubber. When the amount of the employed hydrolysis-preventing is less than 2 parts by mass, a sufficient hydrolysis prevention effect cannot be attained, whereas when the amount is in excess of 8 parts by mass, the hydrolysis-preventing property cannot be drastically improved. When the amounts of the anti-static agent and the anti-tack agent are less than the lower limits of the aforementioned ranges, satisfactory anti-static effect or anti-tack effect cannot be attained, whereas when the amounts are in excess of the upper limits of the aforementioned ranges, these agents react with the hydrolysis-preventing agent, reducing the hydrolysis-preventing property. When the sum of the amount of the hydrolysis-preventing agent and the amount of anti-static agent is excessive, the anti-tack property decreases.

Examples of the hydrolysis-preventing agent include carbodiimides, 4-t-butylcatechol, azodicarbonamides, azodicarboxylic acid esters, and fatty acid amides. From the viewpoint of prevention of hydrolysis, carbodiimides are preferred. Particularly, a carbodiimide hydrolysis-preventing agent efficiently reacts with a carboxylic acid generated during hydrolysis. Therefore, the acid catalytic function of the carboxylic acid on hydrolysis can be effectively inhibited.

No particular limitation is imposed on the anti-static agent, and conventionally employed such agents may be used. Examples of the anti-static agent include anionic, nonionic, cationic, and amphoteric surfactants, and glycols. Through use, as an anti-static agent, of an anionic, nonionic, cationic, or amphoteric surfactant, or a glycol, an increase in modulus of a rubber belt can be more effectively suppressed, as compared with the case in which electrical resistance of the rubber material is reduced through incorporation of carbon black thereinto for facilitating removal of electrostaticity. The anti-static agent may be used singly or in combination of two or more species. When two or more species are employed, the total amount of the anti-static agents is adjusted to 1 to 6 parts by mass. When two or more anti-static agents are used, two or more species having different alkyl chain lengths are more preferably employed. In particular, preferred is a combination of short-alkyl-chain species (i.e., promoting bleeding thereof to the rubber member surface but enhancing anti-static effect) and a long-alkyl-chain species (i.e., not readily causing bleed thereof but attaining small anti-static effect). The anti-static agent maintains conveyance of paper sheets and more effectively prevents electrostatic charging.

The anti-static agent is preferably a cationic surfactant, with a quaternary ammonium salt being particularly preferred. No particular limitation is imposed on the quaternary ammonium salt, and examples of the salt include monoalkyl salts and dialkyl salts. When two or more quaternary ammonium salts are used, preferably, at least one quaternary ammonium salt has an alkyl length of C≥16, and at least one of the other quaternary ammonium salts has an alkyl length of C≤15. Examples of the group having an alkyl length of C≥16 include cetyl, stearyl, arachidyl, and behenyl. Examples of the group having an alkyl length of C≤15 include nonyl, lauryl, and myristyl. A combined use of a quaternary ammonium salt having an alkyl length of C≥16 (i.e., exhibiting comparatively small anti-static effect but being difficult to bleed) and a quaternary ammonium salt having an alkyl length of C≤15 (i.e., readily bleeding but exhibiting large anti-static effect) realizes a rubber member for conveying paper sheets which maintains good paper sheet conveying performance and is prevented from electrostatically charging.

Examples of the anti-tack agent include sulfur factice, sulfur-chloride factice, and sulfur-free factice. Among them, sulfur-free factice is particularly preferred, since the anti-tack effect and cross-linking by organic peroxide are not inhibited. Through use of a factice such as sulfur factice, sulfur-chloride factice, or sulfur-free factice as an anti-tack agent, a decrease in elasticity and an increase in modulus of a rubber belt can be suppressed, as compared with the anti-tack effect by carbon black or calcium carbonate.

The urethane rubber is formed from a high-molecular-weight polyol, an isocyanate compound, a chain-extender, and a cross-linking agent.

Examples of the polyol include polyester-polyol, polycarbonate-polyol, polyether-polyol, and polycarbonate-ether-polyol. Examples of the isocyanate compound include 4,4'-diphenylmethane diisocyanate (MDI), 2,6-toluene diisocyanate(TDI), 1,5-naphthalene diisocyanate (NDI), 3,3-dimethyldiphenyl-4-diisocyanate (TODI), and p-phenylene diisocyanate (PPDI). The cross-linking agent is required to contain at least a short-chain diol and a short-chain triol. No particular limitation is imposed on the short-chain diol, but the cross-linking agent preferably contains at least one of propanediol (PD) and butanediol (BD). A typical example of propanediol is 1,3-propanediol, and that of butanediol is 1,4-butanediol. Although 1,3-propanediol and 1,4-butanediol are preferred in terms of cross-linking performance and cost, other diol compounds may also be employed. No particular limitation is imposed on the short-chain triol, but the cross-linking agent preferably contains at least one of trimethylolethane (TME) and trimethylolpropane (TMP). Needless to say, two or more short-chain diols or two or more short-chain triols may also be employed in combination.

The urethane rubber may be castable or millable. When a millable urethane is used to form the urethane rubber, a millable urethane of a caprolactone type is particularly preferred, since wear of the belt surface and tackiness which would otherwise be generated by wearing can be virtually prevented, resulting in reliable conveyance of paper sheets for a long period of time. When a castable polyurethane is used to form the urethane rubber, the produced rubber elastic body exhibits excellent wear resistance, and the endless rubber member for conveying paper sheets produced from the elastic body exhibits excellent moisture resistance.

In the case of an endless belt for conveying paper sheets, a reinforce core may be introduced to the inside of the belt in accordance with need. The reinforce core is preferably a material having high Young's modulus, and examples of the material include cotton threads, nylon threads, polyester threads, aromatic polyamide threads, and glass fiber. Alternatively, a tube-like body having a thickness of 0.1 mm to 1.0 mm and high stretchability, the body being fabricated by knitting false-twisted nylon yarn by means of a knitting machine, may also be employed as a core.

The rubber member for conveying paper sheets may be imparted with electrical conductivity by adding, to a base rubber, a conductivity-imparting agent (e.g., conductive carbon or an ionic-conductivity-imparting agent). The amount of the conductivity-imparting agent varies depending on the type of the agent. In the case of conductive carbon, the conductive carbon is preferably added in an amount of 10 parts by mass to 100 parts by mass of urethane rubber, for imparting sufficient conductivity to the rubber member to thereby promote removal of electrostatic charge.

The rubber member for conveying paper sheets of the present invention is suitably employed as an endless belt for conveying paper sheets, a rubber roller for conveying paper sheets, or the like used in a machine such as an automatic ticket gate, a cash depositing/dispensing machine, or a bill changer, for the purpose of conveying magnetic cards, coins, etc. In a particularly preferred embodiment, two such members face opposite each other. In this embodiment, a paper sheet is conveyed while the sheet is sandwiched and held by the two belts facing opposite each other.

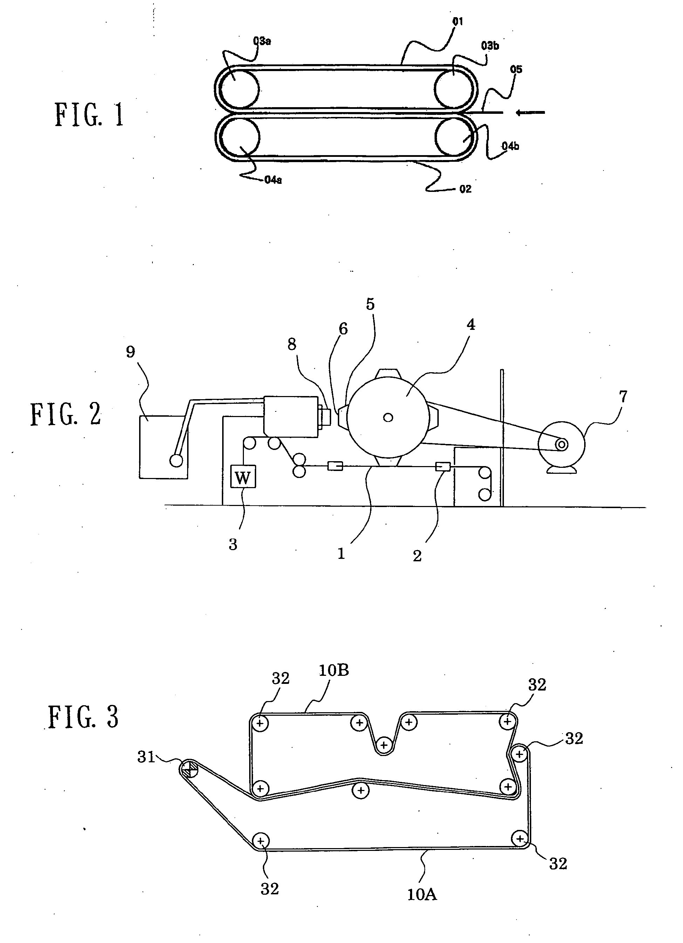

FIG. 1 conceptually shows an exemplary mode of use of an endless belt for conveying paper sheets-one embodiment of the rubber member for conveying paper sheets of the present invention. As shown in FIG. 1, a belt for conveying paper sheets 01 is disposed with tension given by a pair of pulleys 03a, 03b, and a belt for conveying paper sheets 02 is disposed with tension given by a pair of pulleys 04a, 04b, such that the two belts face opposite each other. A paper sheet 05 is conveyed by means of the pair of belts for conveying paper sheets 01, 02 which are rotatably driven, while the sheet is held by the belts.

The present invention will next be described in detail by way of examples, which should not be construed as limiting the invention thereto.

### (Example 1)

To a millable urethane (100 parts by mass) formed of poly-ε-caprolactone diol and MDI (4,4'-diphenylmethane diisocyanate), there were added polycarbodiimide (polycarboximide-based hydrolysis-preventing agent: hereinafter referred to as "hydrolysis-preventing agent A") (3 parts by mass) serving as a hydrolysis-preventing agent; a C16-alkyl length quaternary ammonium salt (cationic surfactant: hereinafter referred to as "anti-static agent A") (2 parts by mass) serving as an anti-static agent; a C12-alkyl length quaternary ammonium salt (cationic surfactant: hereinafter referred to as "anti-static agent B") (1 part by mass) serving as an anti-static agent, and sulfur-free factice (hereinafter referred to as "anti-tack agent A") (10 parts by mass) serving as an anti-tack agent. The mixture was cured at 150°C for 50 minutes. The cured product was released from a mold and cut into pieces each having a predetermined width, to thereby produce endless belts for conveying paper sheets (outer diameter: ϕ 143 mm x width 10 mm x thickness 0.7 mm).

### (Example 2)

The procedure of Example 1 was repeated, except that the amount of hydrolysis-preventing agent A was changed to 7 parts by mass, to thereby produce endless belts for conveying paper sheets of Example 2.

### (Example 3)

The procedure of Example 1 was repeated, except that the amount of hydrolysis-preventing agent A, that of anti-static agent A, that of anti-static agent B, and that of anti-tack agent A were changed to 5 parts by mass, 1 part by mass, 0.5 parts by mass, and 5 parts by mass, respectively, to thereby produce endless belts for conveying paper sheets of Example 3.

### (Example 4)

The procedure of Example 1 was repeated, except that the amount of hydrolysis-preventing agent A and that of anti-tack agent A were changed to 4 parts by mass and 3 parts by mass, respectively, to thereby produce endless belts for conveying paper sheets of Example 4.

### (Example 5)

The procedure of Example 1 was repeated, except that the amount of hydrolysis-preventing agent A, that of anti-static agent A, that of anti-static agent B, and that of anti-tack agent A were changed to 2 parts by mass, 4 parts by mass, 2 parts by mass, and 15 parts by mass, respectively, to thereby produce endless belts for conveying paper sheets of Example 5.

### (Example 6)

The procedure of Example 1 was repeated, except that the amount of hydrolysis-preventing agent A, that of anti-static agent A, that of anti-static agent B, and that of anti-tack agent A were changed to 2 parts by mass, 0.7 parts by mass, 0.35 parts by mass, and 3 parts by mass, respectively, to thereby produce endless belts for conveying paper sheets of Example 6.

### (Example 7)

The procedure of Example 1 was repeated, except that the amount of hydrolysis-preventing agent A, that of anti-static agent A, that of anti-static agent B, and that of anti-tack agent A were changed to 8 parts by mass, 0.7 parts by mass, 0.35 parts by mass, and 3 parts by mass, respectively, to thereby produce endless belts for conveying paper sheets of Example 7.

### (Example 8)

The procedure of Example 1 was repeated, except that the amount of hydrolysis-preventing agent A, that of anti-static agent A, that of anti-static agent B, and that of anti-tack agent A were changed to 2 parts by mass, 4 parts by mass, 2 parts by mass, and 3 parts by mass, respectively, to thereby produce endless belts for conveying paper sheets of Example 8.

### (Example 9)

The procedure of Example 1 was repeated, except that no anti-static agent B was used, and the amount of hydrolysis-preventing agent A, that of anti-static agent A, and that of anti-tack agent A were changed to 2 parts by mass, 6 parts by mass, and 3 parts by mass, respectively, to thereby produce endless belts for conveying paper sheets of Example 9.

### (Example 10)

The procedure of Example 1 was repeated, except that the amount of hydrolysis-preventing agent A, that of anti-static agent A, that of anti-static agent B, and that of anti-tack agent A were changed to 8 parts by mass, 4 parts by mass, 2 parts by mass, and 3 parts by mass, respectively, to thereby produce endless belts for conveying paper sheets of Example 10.

### (Example 11)

The procedure of Example 1 was repeated, except that the amount of hydrolysis-preventing agent A, that of anti-static agent A, that of anti-static agent B, and that of anti-tack agent A were changed to 2 parts by mass, 0.7 parts by mass, 0.35 parts by mass, and 15 parts by mass, respectively, to thereby produce endless belts for conveying paper sheets of Example 11.

### (Example 12)

The procedure of Example 1 was repeated, except that the amount of hydrolysis-preventing agent A, that of anti-static agent A, that of anti-static agent B, and that of anti-tack agent A were changed to 8 parts by mass, 0.7 parts by mass, 0.35 parts by mass, and 15 parts by mass, respectively, to thereby produce endless belts for conveying paper sheets of Example 12.

### (Example 13)

The procedure of Example 5 was repeated, except that the amount of hydrolysis-preventing agent A was changed to 8 parts by mass, to thereby produce endless belts for conveying paper sheets of Example 13.

### (Example 14)

The procedure of Example 13 was repeated, except that the amount of anti-static agent A and that of anti-static agent B were changed to 2 parts by mass and 4 parts by mass, respectively, to thereby produce endless belts for conveying paper sheets of Example 14.

### (Example 15)

The procedure of Example 13 was repeated, except that a glycol (nonionic surfactant: hereinafter referred to as "anti-static agent C") (6 parts by mass) was used as an anti-static agent instead of the anti-static agents A and B, to thereby produce endless belts for conveying paper sheets of Example 15.

### (Example 16)

The procedure of Example 13 was repeated, except that 4-t-butylcatechol (hereinafter referred to as "hydrolysis-preventing agent B") (8 parts by mass) was used as a hydrolysis-preventing agent instead of the hydrolysis-preventing agent A, to thereby produce endless belts for conveying paper sheets of Example 16.

### (Example 17)

The procedure of Example 13 was repeated, except that a C18 alkyl length quaternary ammonium salt (cationic surfactant: hereinafter referred to as "anti-static agent D") (4 parts by mass) and a C10 quaternary ammonium salt (cationic surfactant: hereinafter referred to as "anti-static agent E") (2 parts by mass) were used as anti-static agents instead of the anti-static agents A and B, to thereby produce endless belts for conveying paper sheets of Example 17.

### (Example 18)

The procedure of Example 13 was repeated, except that powdered sulfur factice (hereinafter referred to as "anti-tack agent B") (15 parts by mass) was used as an anti-tack agent instead of the anti-tack agent A, to thereby produce endless belts for conveying paper sheets of Example 18.

### (Example 19)

The procedure of Example 16 was repeated, except that the amount of hydrolysis-preventing agent B was changed to 2 parts by mass, to thereby produce endless belts for conveying paper sheets of Example 19.

### (Example 20)

The procedure of Example 18 was repeated, except that the amount of anti-tack agent B was changed to 3 parts by mass, to thereby produce endless belts for conveying paper sheets of Example 20.

### (Example 21)

The procedure of Example 15 was repeated, except that the amount of anti-static agent C was changed to 1 part by mass, to thereby produce endless belts for conveying paper sheets of Example 21.

### (Example 22)

The procedure of Example 1 was repeated, except that a monoalkyl sulfate salt (anionic surfactant: hereinafter referred to as "anti-static agent F") (6 parts by mass) was used as an anti-static agent instead of the anti-static agents A and B, to thereby produce endless belts for conveying paper sheets of Example 22.

### (Example 23)

The procedure of Example 22 was repeated, except that the amount of anti-static agent F was changed to 1 part by mass, to thereby produce endless belts for conveying paper sheets of Example 23.

### (Example 24)

The procedure of Example 1 was repeated, except that alkylcarboxy betaine (amphoteric surfactant: hereinafter referred to as "anti-static agent G") (6 parts by mass) was used as an anti-static agent instead of the anti-static agents A and B, to thereby produce endless belts for conveying paper sheets of Example 24.

### (Example 25)

The procedure of Example 24 was repeated, except that the amount of anti-static agent G was changed to 1 part by mass, to thereby produce endless belts for conveying paper sheets of Example 25.

### (Comparative Example 1)

The procedure of Example 1 was repeated, except that the amount of hydrolysis-preventing agent A was changed to 1 part by mass, to thereby produce endless belts for conveying paper sheets of Comparative Example 1.

### (Comparative Example 2)

The procedure of Example 1 was repeated, except that the amount of anti-static agent A and that of anti-static agent B were changed to 5 parts by mass and 2.5 parts by mass, respectively, to thereby produce endless belts for conveying paper sheets of Comparative Example 2.

### (Comparative Example 3)

The procedure of Comparative Example 2 was repeated, except that the amount of anti-tack agent A was changed to 20 parts by mass, to thereby produce endless belts for conveying paper sheets of Comparative Example 3.

### (Comparative Example 4)

The procedure of Comparative Example 2 was repeated, except that the amount of anti-tack agent A was changed to 2 parts by mass, to thereby produce endless belts for conveying paper sheets of Comparative Example 4.

### (Comparative Example 5)

The procedure of Example 1 was repeated, except that the amount of anti-static agent A and that of anti-static agent B were changed to 0.5 parts by mass and 0.25 parts by mass, respectively, to thereby produce endless belts for conveying paper sheets of Comparative Example 5.

### (Comparative Example 6)

The procedure of Comparative Example 5 was repeated, except that the amount of anti-tack agent A was changed to 2 parts by mass, to thereby produce endless belts for conveying paper sheets of Comparative Example 6.

### (Comparative Example 7)

The procedure of Comparative Example 5 was repeated, except that the amount of anti-tack agent A was changed to 20 parts by mass, to thereby produce endless belts for conveying paper sheets of Comparative Example 7.

### (Comparative Example 8)

The procedure of Example 1 was repeated, except that the amount of anti-tack agent A was changed to 2 parts by mass, to thereby produce endless belts for conveying paper sheets of Comparative Example 8.

### (Comparative Example 9)

The procedure of Example 1 was repeated, except that the amount of anti-tack agent A was changed to 20 parts by mass, to thereby produce endless belts for conveying paper sheets of Comparative Example 9.

### (Comparative Example 10)

The procedure of Example 1 was repeated, except that the amount of hydrolysis-preventing agent A and that of anti-tack agent A were changed to 10 parts by mass and 2 parts by mass, respectively, to thereby produce endless belts for conveying paper sheets of Comparative Example 10.

### (Comparative Example 11)

The procedure of Example 16 was repeated, except that the amount of hydrolysis-preventing agent B was changed to 1 part by mass, to thereby produce endless belts for conveying paper sheets of Comparative Example 11.

### (Comparative Example 12)

The procedure of Example 16 was repeated, except that the amount of hydrolysis-preventing agent B was changed to 10 parts by mass, to thereby produce endless belts for conveying paper sheets of Comparative Example 12.

### (Comparative Example 13)

The procedure of Example 18 was repeated, except that the amount of anti-tack agent B was changed to 2 parts by mass, to thereby produce endless belts for conveying paper sheets of Comparative Example 13.

### (Comparative Example 14)

The procedure of Example 18 was repeated, except that the amount of anti-tack agent B was changed to 20 parts by mass, to thereby produce endless belts for conveying paper sheets of Comparative Example 14.

### (Comparative Example 15)

The procedure of Example 21 was repeated, except that the amount of anti-static agent C was changed to 8 parts by mass, to thereby produce endless belts for conveying paper sheets of Comparative Example 15.

### (Comparative Example 16)

The procedure of Example 21 was repeated, except that the amount of anti-static agent C was changed to 0.75 parts by mass, to thereby produce endless belts for conveying paper sheets of Comparative Example 16.

### (Comparative Example 17)

The procedure of Example 22 was repeated, except that the amount of anti-static agent F was changed to 8 parts by mass, to thereby produce endless belts for conveying paper sheets of Comparative Example 17.

### (Comparative Example 18)

The procedure of Example 22 was repeated, except that the amount of anti-static agent F was changed to 0.75 parts by mass, to thereby produce endless belts for conveying paper sheets of Comparative Example 18.

### (Comparative Example 19)

The procedure of Example 24 was repeated, except that the amount of anti-static agent G was changed to 8 parts by mass, to thereby produce endless belts for conveying paper sheets of Comparative Example 19.

### (Comparative Example 20)

The procedure of Example 24 was repeated, except that the amount of anti-static agent G was changed to 0.75 parts by mass, to thereby produce endless belts for conveying paper sheets of Comparative Example 20.

### (Comparative Example 21)

The procedure of Example 1 was repeated, except that the amount of anti-static agent A and that of anti-static agent B were changed to 6 parts by mass and 3 parts by mass, respectively, to thereby produce endless belts for conveying paper sheets of Comparative Example 21.

### (Test Example 1) Evaluation of hydrolysis-preventing property

Test samples of the Examples and the Comparative Examples were prepared, and each test sample was left to stand in an atmosphere (85°C, 95% RH) for 30 days.
Thereafter, the percent hardness retention of the test sample was measured and evaluated with the following ratings 1 to 10. The lower the rating, the lower the percent hardness retention, which is not preferred for use. Ratings of 3 or less mean that the belt sample cannot be used in an actual apparatus.

**[Table 1]**

| | | Percent hardness retention (%) |
|---|---|---|
| Ratings | 1 | ≤50 |
| | 2 | 51 to 70 |
| | 3 | 71 to 80 |
| | 4 | 81 to 85 |
| | 5 | 86 to 90 |
| | 6 | 91 to 92 |
| | 7 | 93 to 94 |
| | 8 | 95 to 96 |
| | 9 | 97 to 98 |
| | 10 | ≥99% |

### (Test Example 2) Evaluation of anti-static property

A frictional electrostatic voltage meter shown in FIG. 2 was employed. Each of the endless belts for conveying paper sheets produced in the Examples and the Comparative Examples was employed as a sheet-form rubber member 1, and the electrostatic voltage of the rubber member was continuously measured at 20°C and 40% RH for one minute from the start of the test. The voltage values were averaged.
The average was evaluated with the following ratings 1 to 10. The higher the electrostatic voltage, the worse the conveyance and acceptance of paper sheets, which is not preferred for practical use. Ratings of 3 or less means that the belt sample cannot be used in an actual apparatus.

**[Table 2]**

| | | Electrostatic voltage (V) |
|---|---|---|
| Ratings | 1 | ≥300 |
| | 2 | 150 to 299 |
| | 3 | 100 to 149 |
| | 4 | 50 to 99 |
| | 5 | 30 to 49 |
| | 6 | 20 to 29 |
| | 7 | 15 to 19 |
| | 8 | 10 to 14 |
| | 9 | 5 to 9 |
| | 10 | ≤4 |

### (Test Example 3): Evaluation of anti-tack property

Each of the endless belts for conveying paper sheets produced in the Examples and the Comparative Examples was set to a belt-running tester, and the anti-tack effect was accessed.

As shown in FIG. 3, the belt-running tester has one drive roller 31 and a plurality of idler rollers 32. In each Example and Comparative Example, two endless belts for conveying paper sheets were set in the belt-running tester as a drive belt 10A and an idler belt 10B, and the tension of each belt was adjusted to 10%. This belt-running tester was operated for 24 hours while no paper sheet was conveyed. Thereafter, the tester was left to stand for 24 hours. From the belt driving torque before running and that after running and being left to stand, the percent driving torque increase was calculated. The value was evaluated in terms of adhesion between belts (anti-tack property) with the following ratings 1 to 10. The higher the inter-belt adhesion, the higher the percent driving torque after running, which is not preferred for practical use. Ratings of 3 or less means that the belt sample cannot be used in an actual apparatus.

**[Table 3]**

| | | Percent driving torque increase (%) |
|---|---|---|
| Ratings | 1 | ≥15.1 |
| | 2 | 10.1 to 15.0 |
| | 3 | 5.1 to 10.0 |
| | 4 | 4.1 to 5.0 |
| | 5 | 3.1 to 4.0 |
| | 6 | 2.1 to 3.0 |
| | 7 | 1.1 to 2.0 |
| | 8 | 0.7 to 1.0 |
| | 9 | 0.4 to 0.6 |
| | 10 | ≤0.3% |

The results of Test Examples 1 to 3 are shown in Tables 4 to 8.

**[Table 4]**

| | Examples | | | | | | | | | |
|---|---|---|---|---|---|---|---|---|---|---|
| | 1 | 2 | 3 | 4 | 5 | 6 | 7 | 8 | 9 | 10 |
| Hydrolysis-preventing agent A (parts by mass) | 3 | 7 | 5 | 4 | 2 | 2 | 8 | 2 | 2 | 8 |
| Hydrolysis-preventing agent B (parts by mass) | - | - | - | - | - | - | - | - | - | - |
| Anti-static agent A (parts by mass) | 2 | 2 | 1 | 2 | 4 | 0.7 | 0.7 | 4 | 6 | 4 |
| Anti-static agent B (parts by mass) | 1 | 1 | 0.5 | 1 | 2 | 0.35 | 0.35 | 2 | | 2 |
| Anti-static agent C (parts by mass) | - | - | - | - | - | - | - | - | - | - |
| Anti-static agent D (parts by mass) | - | - | - | - | - | - | - | - | - | - |
| Anti-static agent E (parts by mass) | - | - | - | - | - | - | - | - | - | - |
| Anti-tack agent A (parts by mass) | 10 | 10 | 5 | 3 | 15 | 3 | 3 | 3 | 3 | 3 |
| Anti-tack agent B (parts by mass) | - | - | - | - | - | - | - | - | - | - |
| Hydrolysis-preventing property | 7 | 8 | 9 | 8 | 5 | 6 | 10 | 5 | 5 | 7 |
| Anti-static property | 8 | 8 | 7 | 8 | 10 | 6 | 6 | 10 | 8 | 10 |
| Anti-tack property | 8 | 8 | 8 | 5 | 9 | 5 | 5 | 5 | 5 | 5 |
| Total evaluation (ratings in total) | 23 | 24 | 24 | 21 | 24 | 17 | 21 | 20 | 18 | 22 |

**[Table 5]**

| | Examples | | | | | | | | | |
|---|---|---|---|---|---|---|---|---|---|---|
| | 11 | 12 | 13 | 14 | 15 | 16 | 17 | 18 | 19 | 20 |
| Hydrolysis-preventing agent A (parts by mass) | 2 | 8 | 8 | 8 | 8 | - | 8 | 8 | - | 8 |
| Hydrolysis-preventing agent B (parts by mass) | - | - | - | - | - | 8 | - | - | 2 | - |
| Anti-static agent A (parts by mass) | 0.7 | 0.7 | 4 | 2 | - | 4 | - | 4 | 4 | 4 |
| Anti-static agent B (parts by mass) | 0.35 | 0.35 | 2 | 4 | - | 2 | - | 2 | 2 | 2 |
| Anti-static agent C (parts by mass) | - | - | - | - | 6 | - | - | - | - | - |
| Anti-static agent D (parts by mass) | - | - | - | - | - | - | 4 | - | - | - |
| Anti-static agent E (parts by mass) | - | - | - | - | - | - | 2 | - | - | - |
| Anti-tack agent A (parts by mass) | 15 | 15 | 15 | 15 | 15 | 15 | 15 | - | 15 | - |
| Anti-tack agent B (parts by mass) | - | - | - | - | - | - | - | 15 | - | 3 |
| Hydrolysis-preventing property | 5 | 6 | 6 | 6 | 6 | 5 | 6 | 6 | 4 | 8 |
| Anti-static property | 6 | 6 | 10 | 10 | 9 | 10 | 10 | 10 | 10 | 10 |
| Anti-tack property | 9 | 9 | 9 | 9 | 9 | 9 | 9 | 9 | 9 | 5 |
| Total evaluation (ratings in total) | 20 | 21 | 25 | 25 | 24 | 24 | 25 | 25 | 23 | 23 |

**[Table 6]**

| | Examples | | | | |
|---|---|---|---|---|---|
| | 21 | 22 | 23 | 24 | 25 |
| Hydrolysis-preventing agent A (parts by mass) | 8 | 3 | 3 | 3 | 3 |
| Hydrolysis-preventing agent B (parts by mass) | - | - | - | - | - |
| Anti-static agent A (parts by mass) | - | - | - | - | - |
| Anti-static agent B (parts by mass) | - | - | - | - | - |
| Anti-static agent C (parts by mass) | 1 | - | - | - | - |
| Anti-static agent D (parts by mass) | - | - | - | - | - |
| Anti-static agent E (parts by mass) | - | - | - | - | - |
| Anti-static agent F (parts by mass) | - | 6 | 1 | - | - |
| Anti-static agent G (parts by mass) | - | - | - | 6 | 1 |
| Anti-tack agent A (parts by mass) | 15 | 10 | 10 | 10 | 10 |
| Anti-tack agent B (parts by mass) | - | - | - | - | - |
| Hydrolysis-preventing property | 8 | 5 | 6 | 5 | 6 |
| Anti-static property | 4 | 5 | 4 | 4 | 4 |
| Anti-tack property | 9 | 8 | 8 | 8 | 8 |
| Total evaluation (ratings in total) | 21 | 18 | 18 | 17 | 18 |

**[Table 7]**

| | Comparative Examples | | | | | | | | | |
|---|---|---|---|---|---|---|---|---|---|---|
| | 1 | 2 | 3 | 4 | 5 | 6 | 7 | 8 | 9 | 10 |
| Hydrolysis-preventing agent A (parts by mass) | 1 | 3 | 3 | 3 | 3 | 3 | 3 | 3 | 3 | 10 |
| Anti-static agent A (parts by mass) | 2 | 5 | 5 | 5 | 0.5 | 0.5 | 0.5 | 2 | 2 | 2 |
| Anti-static agent B (parts by mass) | 1 | 2.5 | 2.5 | 2.5 | 0.25 | 0.25 | 0.25 | 1 | 1 | 1 |
| Anti-tack agent A (parts by mass) | 10 | 10 | 20 | 2 | 10 | 2 | 20 | 2 | 20 | 2 |
| Hydrolysis-preventing property | 2 | 2 | 1 | 2 | 8 | 8 | 2 | 8 | 2 | 9 |
| Anti-static property | 8 | 10 | 10 | 10 | 2 | 2 | 2 | 8 | 8 | 8 |
| Anti-tack property | 8 | 8 | 10 | 3 | 8 | 3 | 10 | 3 | 10 | 3 |
| Total evaluation (ratings in total) | 18 | 20 | 21 | 15 | 18 | 13 | 14 | 19 | 20 | 20 |

**[Table 8]**

| | Comparative Examples | | | | | | | | | | |
|---|---|---|---|---|---|---|---|---|---|---|---|
| | 11 | 12 | 13 | 14 | 15 | 16 | 17 | 18 | 19 | 20 | 21 |
| Hydrolysis-preventing agent A (parts by mass) | - | - | 8 | 8 | 8 | 8 | 3 | 3 | 3 | 3 | 3 |
| Hydrolysis-preventing agent B (parts by mass) | 1 | 10 | - | - | - | - | - | - | - | - | - |
| Anti-static agent A (parts by mass) | 4 | 4 | 4 | 4 | - | - | - | - | - | - | 6 |
| Anti-static agent B (parts by mass) | 2 | 2 | 2 | 2 | - | - | - | - | - | - | 3 |
| Anti-static agent C (parts by mass) | - | - | - | - | 8 | 0.75 | - | - | - | - | - |
| Anti-static agent D (parts by mass) | - | - | - | - | - | - | - | - | - | - | - |
| Anti-static agent E (parts by mass) | - | - | - | - | - | - | - | - | - | - | - |
| Anti-static agent F (parts by mass) | - | - | - | - | - | - | 8 | 0.75 | - | - | - |
| Anti-static agent G (parts by mass) | - | - | - | - | - | - | - | - | 8 | 0.75 | - |
| Anti-tack agent A (parts by mass) | 15 | 15 | - | - | 15 | 15 | 10 | 10 | 10 | 10 | 10 |
| Anti-tack agent B (parts by mass) | - | - | 2 | 20 | - | - | - | - | - | - | - |
| Hydrolysis-preventing property | 2 | 4 | 8 | 3 | 6 | 8 | 2 | 6 | 3 | 6 | 2 |
| Anti-static property | 10 | 10 | 10 | 10 | 7 | 3 | 6 | 3 | 4 | 3 | 10 |
| Anti-tack property | 9 | 3 | 2 | 10 | 3 | 9 | 8 | 8 | 8 | 8 | 8 |
| Total evaluation (ratings in total) | 22 | 17 | 20 | 23 | 23 | 20 | 16 | 17 | 15 | 17 | 20 |

### (Results)

The endless belts for conveying paper sheets of Examples 1 to 25, which were formed through molding a mixture containing 100 parts by mass of a urethane rubber, 2 to 8 parts by mass of a hydrolysis-preventing agent, 1 to 6 parts by mass of an anti-static agent, and 3 to 15 parts by mass of an anti-tack agent, all exhibited a hydrolysis-preventing property of 4 or higher, an anti-static property of 4 or higher, and an anti-tack property of 5 or higher and were excellent in hydrolysis-preventing property, anti-static property, and anti-tack property. That is, the rubber member of the invention is excellent in anti-static property, anti-tack property, and moisture resistance.

The endless belts for conveying paper sheets of Comparative Examples 1 and 11 (amount of hydrolysis-preventing agent: 1 part by mass) exhibited low hydrolysis-preventing property. The endless belts for conveying paper sheets of Comparative Examples 2 to 4 (amount of anti-static agent: 7.5 parts by mass), the endless belts for conveying paper sheets of Comparative Examples 15, 17, and 19 (amount of anti-static agent: 8 parts by mass), and the endless belt for conveying paper sheets of Comparative Example 21 (amount of anti-static agent: 9 parts by mass) exhibited low hydrolysis-preventing property. The endless belts for conveying paper sheets of Comparative Examples 3, 7, 9, and 14 (amount of anti-tack agent: 20 parts by mass) exhibited low hydrolysis-preventing property. As a result, when the amount of hydrolysis-preventing agent is less than 2 parts by mass, or when the amount of anti-static agent or that of anti-tack agent is excessive, the hydrolysis-preventing property deteriorates.

The endless belts for conveying paper sheets of Comparative Examples 5 to 7, 16, 18, and 20 (amount of anti-static agent: 0.75 parts by mass) exhibited low anti-static property. The endless belts for conveying paper sheets of Comparative Examples 4, 6, 8, 10, and 13 (amount of anti-tack agent: 2 parts by mass) exhibited low anti-tack property.

The endless belts for conveying paper sheets of Comparative Examples 12 and 15 (sum of amount of hydrolysis-preventing agent and amount of anti-static agent: 16 parts by mass) exhibited low anti-tack property.

### [Description of Reference Numerals]

1: Rubber member
10: End-less belt for conveying paper sheets
10A: Driving belt
10B: Idler belt
31: Driving roller
32: Idler roller

## Claims

1. A rubber member for conveying paper sheets, **characterized in that** the rubber member is formed through molding a mixture comprising 100 parts by mass of a urethane rubber, 2 to 8 parts by mass of a hydrolysis-preventing agent, 1 to 6 parts by mass of an anti-static agent, and 3 to 15 parts by mass of an anti-tack agent.

2. A rubber member for conveying paper sheets according to claim 1, wherein the anti-tack agent is at least one species selected from the group consisting of sulfur factice, sulfur-chloride factice, and sulfur-free factice.

3. A rubber member for conveying paper sheets according to claim 1 or 2, wherein the anti-static agent is at least one species selected from the group consisting of a surfactant and a glycol.

4. A rubber member for conveying paper sheets according to any one of claims 1 to 3, wherein the hydrolysis-preventing agent is at least one species selected from the group consisting of a polycarboximide and 4-t-butylcatechol.

5. A rubber member for conveying paper sheets according to any one of claims 1 to 4, which is an endless belt for conveying paper sheets held by means of two of said endless belt facing each other.

6. A rubber member for conveying paper sheets according to any one of claims 1 to 5, which is a rubber roller for conveying paper sheets.
